Europäisches Patentamt

European Patent Office

Office européen des brevets

(11) Publication number: **0 400 614 B1**

# EUROPEAN PATENT SPECIFICATION

(45) Date of publication of patent specification: **12.01.94**  (51) Int. Cl.⁵: **C09D 183/04**, C08L 83/07, //(C08L83/07,83:07,83:05)

(21) Application number: **90110274.9**

(22) Date of filing: **30.05.90**

(54) **Organopolysiloxane composition for the formation of a peelable cured coating.**

(30) Priority: **31.05.89 JP 138042/89**

(43) Date of publication of application:
**05.12.90 Bulletin 90/49**

(45) Publication of the grant of the patent:
**12.01.94 Bulletin 94/02**

(84) Designated Contracting States:
**BE DE ES FR GB IT NL SE**

(56) References cited:
FR-A- 2 449 111
US-A- 4 701 503
US-A- 4 830 893

(73) Proprietor: **Dow Corning Toray Silicone Company Ltd.**
**3-16, Nihombashi-muromachi 2-chome,**
**Chuo-ku**
**Tokyo 103(JP)**

(72) Inventor: **Masaoka, Hiroshi**
**1-6 Yushudainishi**
**Ichihara-shi, Chiba(JP)**
Inventor: **Sasaki, Shosaku**
**6-25-10 Aobadai**
**Ichihara-shi, Chiba(JP)**

(74) Representative: **Spott, Gottfried, Dr.**
**Patentanwälte Spott und Puschmann**
**Sendlinger-Tor-Platz 11**
**D-80336 München (DE)**

Rank Xerox (UK) Business Services
(3.10/3.9/3.3.3)

## Description

The method of formation of a peelable cured coating on the surface of various base materials, such as paper, synthetic resin films, synthetic fiber fabrics, etc.; to obtain materials having a releasing property with respect to a pressure-sensitive adhesive or other adhesive substance has been known for a long time. The materials used to form the peelable cured coating are usually organopolysiloxane compositions, such as the organopolysiloxane composition as described e.g. in FR-A-2 499 111 and which are made of organopolysiloxane containing vinyl groups, organohydrogenpolysiloxane, and a platinum-family compound and the organopolysiloxane composition made of a low- viscosity organopolysiloxane containing hexenyl groups or other higher alkenyl groups, organohydrogenpolysiloxane, and a platinum-family compound.

However, for the former organopolysiloxane composition, since the curing rate is low, in order to cure it in a short time, heat treatment at a high temperature over 140°C is needed. As a result, due to the base material, thermal shrinkage or foaming may occur, and the gloss of the finished mirror surface is degraded. These are problems.

On the other hand, for the latter organopolysiloxane composition, although the curing rate is high, the cured coating strength is nevertheless low because its main component is a low-viscosity organopolysiloxane. Hence, when the peelable sheet made of it is wound, the surface may be easily damaged. In addition, when it is applied on a paper sheet or other porous base material, it may easily infiltrate into the interior of the porous base material. As a result, the coating amount of the organopolysiloxane composition is increased. This increases the cost and is undesirable. Due to these problems, it is not satisfactory for applications.

Furthermore, both of the aforementioned compositions form coatings with a very high releasing property; hence, they cannot be used to make products with a medium releasing property, such as engineering paper, asphalt package paper, different-releasing double-surface peeling paper, etc., as well as tapes, labels, etc., which require an appropriate level of releasing property. In this way, their applications are quite limited.

The purpose of this invention is to provide a type of organopolysiloxane composition for the formation of a peelable cured coating characterized by the fact that the curing rate is high at a low temperature of about 90°C and the formed cured coating has a medium releasing property or suitable releasing property required by engineering paper, asphalt package paper, tapes, labels, etc.

That is, this invention provides a type of organopolysiloxane composition for the formation of a peelable cured coating characterized by the fact that it comprises the following components;

(A) 100 parts by weight of organopolysiloxane, the average molecule of which contains two or more higher alkenyl groups represented by the formula $H_2C=CH-(CH_2)_a-$, where a has a value of from 2 to 8;

(B) 0.3-40 parts by weight of organohydrogenpolysiloxane, the average molecule of which contains two or more silicon-bonded hydrogen atoms;

(C) 2-200 parts by weight of an organopolysiloxane resin which is soluble in an organic solvent and consists of $R_3SiO_{1/2}$ units, $R_2SiO_{2/2}$ units or $RSiO_{3/2}$ units and $SiO_{4/2}$ units, where R represents a monovalent hydrocarbon group, with each molecule having at least two alkenyl groups represented by the formula $H_2C=CH-(CH_2)_a-$, where a has a value of from 2 to 8;

(D) 0.001-5 parts by weight of an addition reaction inhibitor;

(E) a platinum-family compound in an amount suitable for catalysis of an addition reaction; and

(F) any amount of an organic solvent.

This invention can be explained as follows. The organopolysiloxane as component (A) of this invention is one of the major components of the composition of this invention. It is an organopolysiloxane with each molecule containing two or more higher alkenyl groups represented by the formula $H_2C=CH-(CH_2)_a-$, where a is 2-8.

Examples of said organopolysiloxane include an organopolysiloxane represented by the average unit formula $R'_bSiO_{(4-b)/2}$ containing two or more higher alkenyl groups represented by the formula $H_2C=CH-(CH_2)_a-$, where a is 2-8. In this case, R' in the formula represents monovalent hydrocarbon groups such as alkyl groups, such as methyl, ethyl, propyl and butyl; higher alkenyl groups represented by the formula $H_2C=CH-(CH_2)_a-$, where a is 2-8; aryl groups, such as phenyl, tolyl and xylyl; aralkyl groups such as 2-phenylethyl and 2-phenylpropyl; and halogenated hydrocarbon groups, such as 3,3,3-trifluoropropyl and other substituted or unsubstituted monovalent hydrocarbon groups.

From the standpoint of the releasing characteristics, it is preferred that at least 70 mol% of R' be methyl groups; b is a number from 1.9-2.05. The organopolysiloxane may contain a small amount of hydroxyl groups and alkoxy groups.

Specific examples of this component include dimethylbutenylsiloxy-terminated dimethylpolysiloxane, dimethylpentenylsiloxy-terminated dimethylpolysiloxane, dimethylhexenylsiloxy-terminated dimethylpolysiloxane, dimethylheptenylsiloxy-terminated dimethylpolysiloxane, dimethyloctenylsiloxy-terminated dimethylpolysiloxane, trimethylsiloxy-terminated methylbutenylsiloxane-dimethylsiloxane copolymer, silanol-terminated methylbutenylsiloxane-dimethylsiloxane copolymer, trimethylsiloxy-terminated methylpentenylsiloxane-dimethylsiloxane copolymer, trimethylsiloxy-terminated methylhexenylsiloxane-dimethylsiloxane copolymer, silanol-terminated methylhexenylsiloxane-dimethylsiloxane copolymer, trimethylsiloxy-terminated ethylheptenylsiloxane- dimethylsiloxane copolymer, trimethylsiloxy-terminated methyloctenylsiloxane-dimethylsiloxane copolymer, dimethylpentenylsiloxy-terminated methylphenylsiloxane- dimethylsiloxane copolymer, silanol-terminated methylphenylsiloxane-dimethylsiloxane copolymer, dimethylhexenylsiloxy-terminated methylhexenylsiloxane-dimethylsiloxane copolymer, dimethylhexenylsiloxy-terminated diphenylsiloxane-dimethylsiloxane copolymer, etc.

The molecular weight of this component may be anywhere in the range from a fluid with a viscosity of 100 centistokes at 25°C to a gum, i.e. raw-rubber-like type. However, in order to obtain excellent properties of the peelable cured coating, such as tensile strength, elongation, tensile rupture strength, wear resistance, etc., the raw-rubber-like organopolysiloxane with a high polymerization degree is preferred. When such an organopolysiloxane is used, the plasticity defined in the Japanese Industrial Standard JISC 2123 usually should be higher than 100.

The organohydrogenpolysiloxane used as component (B) in this invention is the crosslinking agent for component (A). In order to play the role of a crosslinking agent, each molecule must contain two or more hydrogen atoms for bonding silicon atoms. Examples of this type of organohydrogenpolysiloxane include dimethylhydrogensiloxy- terminated dimethylsiloxane-methylhydrogen siloxane copolymer, trimethylsiloxy-terminated dimethylsiloxane-methylhydrogen siloxane copolymer, dimethylphenylsiloxy-terminated dimethylsiloxane-methylhydrogen siloxane copolymer, trimethylsiloxy-terminated methylhydrogen polysiloxane, cyclic methylhydrogen polysiloxane, hydrogen polysilsesquioxane, a copolymer made of dimethylhydrogen siloxane units and $SiO_2$ units, etc.

For 100 parts by weight of component (A), the amount of component (B) used is 0.3-40 parts by weight. If the amount is smaller than 0.3 part by weight, the cured coating formation rate is low; on the other hand, if the amount is higher than 40 parts by weight, the releasing property of the cured coating is degraded.

Component (C) of this invention is an organopolysiloxane resin with each molecule containing at least two alkenyl groups represented by the formula $CH_2 = CH(CH_2)_a-$, where a is 2-8. In this component, the $R_3SiO_{1/2}$ units, $R_2SiO_{2/2}$ units, and $RSiO_{3/2}$ units act to increase the compatibility with component (A); $SiO_{4/2}$ units act to decrease the releasing property. Hence, an appropriate balance should be used for the molar ratio of $R_3SiO_{1/2}$ units to $R_2SiO_{2/2}$ units or $RSiO_{3/2}$ units to $SiO_{4/2}$ units. The preferred molar ratio among these three types of units is 0.1-1.5:0.1-1.0:1.0. Besides, $R_2SiO_{2/2}$ units and $RSiO_{3/2}$ units can be used together.

In said units, R represents a monovalent hydrocarbon group, such as a methyl, ethyl, propyl and other alkyl groups; phenyl and other aryl groups; vinyl, allyl, butenyl, pentenyl, hexenyl, heptenyl, octenyl and other alkenyl groups, etc.

Examples of $R_3SiO_{1/2}$ units include $(CH_3)_3SiO_{1/2}$ units, $(CH_2 = CH)(CH_3)_2SiO_{1/2}$ units, $\{CH_2 = CH(CH_2)_4\}(CH_3)_2SiO_{1/2}$ units, $CH_3(C_6H_5)(CH_2 = CH)SiO_{1/2}$ units, $(CH_3)_2(C_6H_5)SiO_{1/2}$ units, etc. Examples of $R_2SiO$ units include $(CH_3)_2SiO_{2/2}$ units, $CH_3(CH_2 = CH)SiO_{2/2}$ units, $CH_3(C_6H_5)SiO_{2/2}$ units, $(C_2H_5)_2SiO_{2/2}$ units, etc. Examples of $RSiO_{3/2}$ units include $CH_3SiO_{3/2}$ units, $CH_2 = CH-CH_2SiO_{3/2}$ units, $C_6H_5SiO_{3/2}$ units, etc.

This component may be produced by cohydrolysis of the silanes represented by the formulas $R_3SiX$ and $R_2SiX_2$ or $RSiX_3$ and $SiX_4$, where X represents chlorine, bromine, or some other halogen atom, or $CH_3O-$, $C_2H_2O-$, or some other alkoxy group; it may also be produced by the reaction between a silane represented by $R_3SiX$, $R_2SiX_2$, or $RSiX_3$, where X has the same meaning as above, and an acidic colloidal silica dispersion in water. Usually, it has several percentages by weight of silanol groups or alkoxy groups.

Besides, it can be treated by a triorganosilylating agent to reduce or eliminate the silanol groups, if desired. This component is usually in the form of a thick liquid, powder, or solid.

For 100 parts by weight of component (A), the amount of this component should be 2-200 parts by weight. If it is less than 2 parts by weight, the releasing property is too strong for the cured coating. That is to say, it releases too easily. On the other hand, if it is more than 200 parts by weight, the releasing property becomes too weak. That is to say, it releases poorly. In both cases, an appropriate medium releasing property cannot be obtained.

Component (D) used in this invention is an addition reaction inhibitor necessary to acquire storage stability of this composition at room temperature. Examples of this component include 3-methyl-1-butyne-3-ol, 3,5-dimethyl-1-hexyne-3-ol, 3-methyl-1-pentene-3-ol, phenylbutynol, and other alkynyl alcohols; 3-methyl-3-pentene-1-yne, 3,5-dimethyl-1-hexyne-3-yne, tetramethylvinylsiloxane cyclic compound and benzotriazole.

The reaction inhibiting effect of this component depends on the molecular configuration. There is no special limitation on its amount added, as long as a pot life suitable for practical applications can be realized. Usually, for 100 parts by weight of component (A), its amount should be 0.001-5 parts by weight, preferably 0.05-1 part by weight.

Component (E) used in this invention is a platinum-family compound used as a catalyst for crosslinking and curing the composition of this invention by way of an addition reaction, i.e. an hydrosilylation reaction. Examples include microparticles of platinum adsorbed on a carbon powder carrier, chloroplatinic acid, alcohol-modified chloroplatinic acid, an olefin complex of chloroplatinic acid, a coordination compound of chloroplatinic acid and vinylsiloxane, platinum black, palladium, rhodium catalyst, etc.

The amount used depends on the type of catalyst and cannot generally be defined. However, in order to form the cured coating by heating the composition of this invention below 90°C, the amount is usually 1-1000 ppm with respect to the total amount of components (A)-(C).

Component (F) used in this invention is an organic solvent which is necessary for improving the storage stability of the composition of this invention and for improving the coating property on various base materials, if desired. Organic solvents that can homogeneously dissolve the composition of this invention can be used, such as benzene, toluene, xylene, and other aromatic hydrocarbons; heptane, hexane, pentane, and other aliphatic hydrocarbons; trichloroethylene, perchloroethylene, and other halogenated hydrocarbons; ethyl acetate, methylethyl ketone, etc.

The amount of solvent to be used in the compositions of this invention is determined by the amount of thinning and stabilizing desired and can range from zero.

The composition of this invention can be prepared simply by blending said components (A)-(F) into a homogeneous mixture. A preferable mixing scheme is to first homogeneously dissolve component (A) in component (F), then blend the obtained solution with components (B)-(E).

The composition of this invention prepared above can be coated on the surfaces of various base materials, such as paper, synthetic resin films, fabrics, etc., followed by heat treatment at a heating temperature of 80-90°C for a heating time of 10-20 sec. In this way, an excellent cured coating having a very stable releasing property with respect to the pressure-sensitive adhesive and other adhesive materials, and with an excellent adhesive property to the base materials at the same time can be formed. Hence, the composition of this invention can be applied on a synthetic resin film which may be easily deformed due to heating as well as on paper sheets with poor heat resistance. In particular, since it has a medium releasing property or an appropriate releasing property, it can be used for making engineering paper, asphalt package paper, tapes, labels, etc., which require such a releasing property.

In the following, this invention will be explained with reference to application examples. In these application examples, "parts" refers to "parts by weight," and the viscosity is measured at 25°C.

The various data in the application examples were measured using the following methods.

Pot Life - 450 ml of an organopolysiloxane composition were added to a 600-ml glass bottle equipped with a cooling pipe. The composition was stirred at 25°C and its viscosity was measured at a prescribed interval.

Curing Property - A prescribed amount of an organopolysiloxane composition was coated on the surface of a film- or sheet-shaped base material. The specimen was then heated at a prescribed temperature in a hot-air circulating-type oven. The time needed for forming a perfectly cured coating was measured.

Peeling Resistance - A prescribed amount of an organopolysiloxane composition was coated on the surface of a film- or sheet-shaped base material. The specimen was then heated at a prescribed temperature in a hot-air circulating-type oven for a prescribed time to form a cured coating. The surface of the cured coating was then applied with an acryl solvent type of adhesive (Oribain BPS5127, produced by Toyo Ink Co., Ltd.) and was heat-treated at 100°C for 2 min. A piece of laminating paper with a basis weight of 55 g/m$^2$ was then laminated on said treated surface under a load of 20 g/cm$^2$ at 25°C for a prescribed ageing time to form a sample for measurement. The sample was cut into 5 cm-wide specimens. Using a tensile tester, the laminating paper was peeled off at an angle of 180° with a peeling speed of 0.3 m/min. The force (g) needed for peeling was measured.

Residual Bonding Rate - In the same way as in the case of peeling resistance, a cured coating of the organopolysiloxane composition was formed on the surface of a sheet-shaped base material. A polyester tape (Polyester Tape 31B, product of Nitto Electric Industrial C o., Ltd.) was laminated on its surface under a load of 20 g/cm$^2$ and was heat treated at 70°C for 20 hours. The tape was then peeled off and bonded onto a stainless steel sheet. The tape was then peeled off at an angle of 180° and a peeling speed of 0.3 m/min. The force (g) needed for peeling was measured. The percentage of this force with respect to that for a standard untreated tape was derived as the residual bonding rate.

## EXAMPLE 1

A methylhexenylsiloxane-dimethylpolysiloxane copolymer raw rubber with the terminals of the molecular chain blocked by trimethylsiloxy groups (hexenyl group content: 2.0 mol%), 100 parts; 4 parts of methylhydrogenpolysiloxane which has a viscosity of 5 cP and has the molecular chain terminals blocked by trimethylsiloxy groups; 10 parts of an organic-solvent- soluble powder-like organopolysiloxane resin made of 0.4:0.35:1.0 (molar ratio) of $\{H_2C=CH\text{-}(CH_2)_4\}(CH_3)_2SiO_{1/2}$ units, $CH_3SiO_{3/2}$ units and $SiO_{4/2}$ units; and 0.9 part of 3,5-dimethyl-3-hexene-1-yne were dissolved in 1800 parts of toluene. With respect to the total weight of the organopolysiloxane, 130 ppm (platinum equivalent) of the chloroplatinic acid-divinyltetramethylsiloxane complex were then added to prepare the organopolysiloxane composition for the formation of a peelable coating. With a coating amount of 0.7 g/cm$^2$, the composition was then coated on the mirror- finished surface of a piece of polyethylene laminate Kraft paper, followed by heat treatment at 90°C for 20 sec. The obtained cured coating was then used for the measurement of the peeling resistance and residual bonding rate.

The results are listed in Table I. The adhesive used in the measurement of the peeling resistance was an acryl- solvent-type adhesive (Oribain BPS5127, product of Toyo Ink Co., Ltd.). Besides, for comparison, an organopolysiloxane composition was prepared in the same way as above except that the organopolysiloxane resin was not used. For the obtained organopolysiloxane composition, the curing property, peeling resistance, and residual bonding rate were measured in the same way as above. The measurement results are listed in Table I.

Table I

| Type | Curing Property (sec) 90°C | Peeling resistance (g) 1 day later | Peeling resistance (g) 10 days later | Residual bonding rate % |
|------|------|------|------|------|
| This invention | 15 | 46 | 45 | 98 |
| Comparative Example | 14 | 23 | 24 | 98 |

## EXAMPLE 2

A dimethylsiloxane-methylheptenylsiloxane copolymer raw rubber with molecular chain terminals blocked by trimethylsiloxy groups (heptenylsiloxane units: 1.8 mol%, plasticity: 1.45), 100 parts; 20 Parts of an organic-solvent- soluble powder-like organopolysiloxane resin containing 0.4:0.4:1.0 (molar ratio) of $\{H_2C=CH(CH_2)_3\}(CH_3)_2SiO_{1/2}$ units, $CH_3SiO_{3/2}$ units, and $SiO_{4/2}$ units; 5 parts of methylhydrogenpolysiloxane which has a viscosity of 20 cP and has the molecular chain terminals blocked by trimethylsiloxy groups; and 0.9 part of 3,5-dimethyl-3-hexene-1-yne were dissolved in 1800 parts of toluene. Subsequently, 130 ppm (platinum equivalent) of a chloroplatinic acid-divinyltetramethylsiloxane complex were added to form the organopolysiloxane composition for the formation of a peelable cured coating. The properties of the composition were then measured in the same way as in Application Example 1. The results are listed in Table II.

An amount (0.4 g/cm² solid equivalent amount) of the organopolysiloxane composition obtained above was coated on the corona-discharge-treated surface of a polypropylene film. The curing property, peeling resistance, and residual bonding rate were measured in the same way as in Application Example 1. The measurement results are listed in Table II.

For comparison, an organopolysiloxane composition for the formation of a peelable cured coating was prepared in the same way as above except that the powder-like organopolysiloxane resin used in this case contains 0.4:0.4:1.0 (molar ratio) of $(H_2C=CH)(CH_3)_2SiO_{1/2}$ units, $CH_3SiO_{3/2}$ units, and $SiO_{4/2}$ units. For this composition, the curing property, peeling resistance, and residual bonding rate were measured in the same way as in Application Example 1. The results are listed in Table II.

Table II

| Type | Curing property (sec) 90°C | Peeling resistance (g) | | Residual bonding rate % |
|------|------|------|------|------|
| | | 1 day later | 10 days later | |
| This invention | 16 | 73 | 72 | 97 |
| Comparative Example | 19 | 69 | 99 | 73 |

EXAMPLE 3

100 parts of a dimethylsiloxane-methyloctenylsiloxane copolymer raw rubber with molecular chain terminals blocked by dimethyloctenylsiloxy groups (octenyl siloxane units: 2.1 mol%, viscosity: 500 centistokes), 4 parts of methylhydrogenpolysiloxane which has a viscosity of 5 cp and has molecular chain terminals blocked by trimethylsiloxy groups, 10 parts of an organopolysiloxane-soluble powder-like organopolysiloxane resin containing 0.25:0.4:1.0 (molar ratio) of $\{H_2C=CH(CH_2)_5\}(CH_3)_2SiO_{1/2}$ units, $CH_3SiO_{3/2}$ units and $SiO_{4/2}$ units, 0.9 part of 3,5-dimethyl-3-hexene-1-yne, and 120 ppm (platinum equivalent) of a chloroplatinic acid-divinyltetramethyldisiloxane complex were mixed to form the organopolysiloxane composition for the formation of a peelable cured coating.

For the obtained composition, the curing property, peeling resistance, and residual bonding rate were measured under the same conditions as in Application Example 1. The results are listed in Table III.

For comparison, an organopolysiloxane composition for the formation of a peelable coating was prepared in the same way as above except that the organopolysiloxane resin was not added in this case. The properties of the composition were measured in the same way as in Application Example 1. The results are listed in Table III.

### Table III

| Type | Curing property (sec) 90°C | Peeling resistance (g) 1 day later | Peeling resistance (g) 10 days later | Residual bonding rate % |
|---|---|---|---|---|
| This invention | 21 | 42 | 44 | 97 |
| Comparative Example | 20 | 19 | 20 | 96 |

For the organopolysiloxane composition for the formation of a peelable cured coating of this invention, since it contains components (A)-(F), in particular, components (C) and (D), the curing rate is high even at a relatively low temperature (around 90°C); the formed cured coating has a medium peeling property or an appropriate peeling property suitable for engineering paper, asphalt paper, tapes, labels, etc.

## Claims

1. An organopolysiloxane composition for the formation of a peelable cured coating characterized by the fact that it comprises the following components:

   (A) 100 parts by weight of organopolysiloxane, the average molecule of which contains two or more higher alkenyl groups represented by the formula $H_2C=CH-(CH_2)_a-$, where a has a value of from 2 to 8;

   (B) 0.3-40 parts by weight of organohydrogenpolysiloxane, the average molecule of which contains two or more silicon-bonded hydrogen atoms;

   (C) 2-200 parts by weight of an organopolysiloxane resin which is soluble in an organic solvent and consists of $R_3SiO_{1/2}$ units, $R_2SiO_{2/2}$ units or $RSiO_{3/2}$ units and $SiO_{4/2}$ units, where R represents a monovalent hydrocarbon group, with each molecule having at least two alkenyl groups represented by the formula $H_2C=CH-(CH_2)_a-$, where a has a value of from 2 to 8;

   (D) 0.001-5 parts by weight of an addition reaction inhibitor;

   (E) a platinum-family compound in an amount suitable for catalysis of an addition reaction; and

   (F) any amount of an organic solvent.

2. A composition according to claim 1 wherein component (A) has the average unit formula $R'_bSiO_{(4-b)/2}$, wherein each $R'$ represents a monovalent hydrocarbon or halogenated hydrocarbon group, at least two of which are higher alkenyl groups represented by the formula $H_2C=CH-(CH_2)_a-$, where a has a value of from 2 to 8; at least 70 mol% of $R'$ are methyl groups; and b is a number from 1.9 to 2.05.

3. A composition according to claim 1 wherein component (A) is a raw-rubber-like material having a plasticity, as defined in JISC 2123, higher than 100.

4. A composition according to claim 1 wherein component (C) has a molar ratio of $R_3SiO_{1/2}$ units to $R_2SiO_{2/2}$ units and/or $RSiO_{3/2}$ units to $SiO_{4/2}$ units of 0.1-1.5:0.1-1.0:1.0.

5. A composition according to claim 4 wherein component (C) consists of $\{H_2C=CH(CH_2)_a\}$-$(CH_3)_2SiO_{1/2}$ units, $CH_3SiO_{3/2}$ units and $SiO_{4/2}$

units.

6. A composition according to claim 1 wherein component (C) has been treated with a triorganosilylating agent to reduce its silanol group content.

7. An organopolysiloxane resin which is soluble in an organic solvent and consists of $R_3SiO_{1/2}$ units, $R_2SiO_{2/2}$ units and/or $RSiO_{3/2}$ units and $SiO_{4/2}$ units, where R represents a monovalent hydrocarbon group and which is characterised in that each molecule has at least two alkenyl groups represented by the formula $H_2C=CH-(CH_2)_a-$, where a has a value of from 2 to 8.

8. An organopolysiloxane resin according to claim 7 wherein the molar ratio of $R_3SiO_{1/2}$ units to $R_2SiO_{2/2}$ units and/or $RSiO_{3/2}$ units to $SiO_{4/2}$ units has a value of 0.1-1.5:0.1-1.0:1.0.

9. An organopolysiloxane resin according to claim 8 which consists of $\{H_2C=CH(CH_2)_a\}(CH_3)_2SiO_{1/2}$ units, $CH_3SiO_{3/2}$ units and $SiO_{4/2}$ units.

10. An organopolysiloxane resin according to claim 7 which has been treated with a triorganosilylating agent to reduce its silanol group content.

**Patentansprüche**

1. Organopolysiloxanzusammensetzung zur Bildung einer abziehbaren gehärteten Beschichtung, gekennzeichnet durch die Tatsache, daß sie die folgenden Komponenten umfaßt:
    (A) 100 Gew.-Teile Organopolysiloxan, bei dem das durchschnittliche Molekül zwei oder mehr höhere Alkenylgruppen der Formel $H_2C=CH-(CH_2)_a-$ enthält, worin a einen Wert von 2 bis 8 hat;
    (B) 0,3 bis 40 Gew.-Teile Organohydrogenpolysiloxan, wobei das durchschnittliche Molekül zwei oder mehr siliciumgebundene Wasserstoffatome enthält;
    (C) 2 bis 200 Gew.-Teile eines Organopolysiloxanharzes, das in einem organischen Lösungsmittel löslich ist und aus $R_3SiO_{1/2}$-Einheiten, $R_2SiO_{2/2}$-Einheiten oder $RSiO_{3/2}$-Einheiten und $SiO_{4/2}$-Einheiten besteht, worin R eine monovalente Kohlenwasserstoffgruppe bedeutet, worin jedes Molekül mindestens zwei Alkenylgruppen der Formel $H_2C=CH-(CH_2)_a-$ enthält, worin a einen Wert von 2 bis 8 hat;
    (D) 0,001 bis 5 Gew.-Teile eines Inhibitors der Additionsreaktion;
    (E) eine Verbindung der Platinfamilie in einer Menge, die zur Katalyse einer Additionsreaktion geeignet ist; und
    (F) irgendeine Menge eines organischen Lösungsmittels.

2. Zusammensetzung nach Anspruch 1, worin Komponente (A) die durchschnittliche Einheitsformel $R'_bSiO_{(4-b)/2}$ hat, worin jeder Rest R' eine monovalente Kohlenwasserstoffgruppe oder halogenierte Kohlenwasserstoffgruppe bedeutet, wovon mindestens zwei höhere Alkenylgruppen der Formel $H_2C=CH-(CH_2)_a-$ sind, worin a einen Wert von 2 bis 8 hat; wobei mindestens 70 Mol-% der Reste R' Methylgruppen sind; und b eine ganze Zahl von 1,9 bis 2,05 ist.

3. Zusammensetzung nach Anspruch 1, worin Komponente (A) ein rohkautschukartiges Material mit einer Plastizität, wie in JISC 2123 definiert, von mehr als 100 ist.

4. Zusammensetzung nach Anspruch 1, worin Komponente (C) ein molares Verhältnis der $R_3SiO_{1/2}$-Einheiten zu $R_2SiO_{2/2}$-Einheiten und/oder $RSiO_{3/2}$-Einheiten zu $SiO_{4/2}$-Einheiten von 0,1-1,5: 0,1-1,0:1,0 hat.

5. Zusammensetzung nach Anspruch 4, worin Komponente (C) aus $\{H_2C=CH(CH_2)_a\}(CH_3)_2SiO_{1/2}$-Einheiten, $CH_3SiO_{3/2}$-Einheiten und $SiO_{4/2}$-Einheiten besteht.

6. Zusammensetzung nach Anspruch 1, worin Komponente (C) mit einem Triorganosilylierungsmittel behandelt wurde, um den Gehalt an Silanolgruppen zu vermindern.

7. Organopolysiloxanharz, das in einem organischen Lösungsmittel löslich ist und aus $R_3SiO_{1/2}$-Einheiten, $R_2SiO_{2/2}$-Einheiten und/oder $RSiO_{3/2}$-Einheiten und $SiO_{4/2}$-Einheiten besteht, worin R eine monovalente Kohlenwasserstoffgruppe bedeutet, und das dadurch gekennzeichnet ist, daß jedes Molekül mindestens zwei Alkenylgruppen der Formel $H_2C=CH-(CH_2)_a-$ enthält, worin a einen Wert von 2 bis 8 hat.

8. Organopolysiloxanharz nach Anspruch 7, worin das molare Verhältnis von $R_3SiO_{1/2}$-Einheiten zu $R_2SiO_{2/2}$-Einheiten und/oder $RSiO_{3/2}$-Einheiten zu $SiO_{4/2}$-Einheiten einen Wert von 0,1-1,5: 0,1-1,0:1,0 hat.

9. Organopolysiloxanharz nach Anspruch 8, das aus $\{H_2C=CH(CH_2)_a\}(CH_3)_2SiO_{1/2}$-Einheiten,

$CH_3SiO_{3/2}$-Einheiten und $SiO_{4/2}$-Einheiten besteht.

10. Organopolysiloxanharz nach Anspruch 7, das mit einem Triorganosilylierungsmittel behandelt wird, um den Gehalt an Silanolgruppen zu vermindern.

**Revendications**

1. Une composition d'organopolysiloxane pour la formation d'un revêtement durci détachable, caractérisée par le fait qu'elle comprend les composants suivants :

(A) 100 parties en poids d'un organopolysiloxane dont la molécule moyenne contient deux ou plusieurs groupes alcényles supérieurs représentés par la formule $H_2C=CH-(CH_2)_a-$, où la valeur de a est de 2 à 8 ;

(B) 0,3 à 40 parties en poids d'un organohydrogénopolysiloxane dont la molécule moyenne contient deux ou plusieurs atomes d'hydrogène liés au silicium ;

(C) 2 à 200 parties en poids d'une résine d'organopolysiloxane qui est soluble dans un solvant organique et constituée de motifs $R_3SiO_{1/2}$, de motifs $R_2SiO_{2/2}$ ou motifs $RSiO_{3/2}$ et de motifs $SiO_{4/2}$, où R représente un groupe hydrocarboné monovalent, chaque molécule ayant au moins deux groupes alcényles représentés par la formule $H_2C=CH-(CH_2)_a-$, où la valeur de a est de 2 à 8 ;

(D) 0,001 à 5 parties en poids d'un inhibiteur de réaction d'addition ;

(E) un composé de métal de la famille du platine en une quantité convenant pour catalyser une réaction d'addition ; et

(F) une quantité quelconque d'un solvant organique.

2. Une composition selon la revendication 1, dans laquelle le composant (A) correspond à la formule moyenne de motifs $R'_bSiO_{(4-b)/2}$, où chaque R' représente un groupe hydrocarboné ou hydrocarboné halogéné monovalent, dont deux au moins sont des groupes alcényles supérieurs représentés par la formule $H_2C=CH-(CH_2)_a-$, où la valeur de a est de 2 à 8 ; au moins 70 mol % des R' sont des groupes méthyle ; et b est un nombre de 1,9 à 2,05.

3. Une composition selon la revendication 1, dans laquelle le composant (A) est une matière semblable à du caoutchouc non vulcanisé ayant une plasticité, telle que définie dans la norme JISC 2123, supérieure à 100.

4. Une composition selon la revendication 1, dans laquelle le composant (C) a un rapport molaire des motifs $R_3SiO_{1/2}$ aux motifs $R_2SiO_{2/2}$ et/ou motifs $RSiO_{3/2}$ aux motifs $SiO_{4/2}$ de 0,1 à 1,5:0,1 à 1,0:1,0.

5. Une composition selon la revendication 4, dans laquelle le composant (C) est constitué de motifs $[H_2C=CH(CH_2)_a](CH_3)_2SiO_{1/2}$, de motifs $CH_3SiO_{3/2}$ et de motifs $SiO_{4/2}$.

6. Une composition selon la revendication 1, dans laquelle le composant (C) a été traité avec un agent de triorganosilylation pour réduire sa teneur en groupes silanol.

7. Une résine d'organopolysiloxane qui est soluble dans un solvant organique et constituée de motifs $R_3SiO_{1/2}$, de motifs $R_2SiO_{2/2}$ et/ou motifs $RSiO_{3/2}$ et de motifs $SiO_{4/2}$, où R représente un groupe hydrocarboné monovalent et qui est caractérisée en ce que chaque molécule comporte au moins deux groupes alcényles représentés par la formule $H_2C=CH-(CH_2)_a-$, où la valeur de a est de 2 à 8.

8. Une résine d'organopolysiloxane selon la revendication 7, dans laquelle le rapport molaire des motifs $R_3SiO_{1/2}$ aux motifs $R_2SiO_{2/2}$ et/ou motifs $RSiO_{3/2}$ aux motifs $SiO_{4/2}$ a une valeur de 0,1 à 1,5:0,1 à 1,0:1,0.

9. Une résine d'organopolysiloxane selon la revendication 8, qui est constituée de motifs $[H_2C=CH(CH_2)_a](CH_3)_2SiO_{1/2}$, de motifs $CH_3SiO_{3/2}$ et de motifs $SiO_{4/2}$.

10. Une résine d'organopolysiloxane selon la revendication 7, qui a été traitée par un agent de triorganosilylation pour réduire sa teneur en groupes silanol.